# FASCICULE DE BREVET EUROPEEN

(11) **EP 0 463 901 B1**
(45) Date de publication et mention de la délivrance du brevet: **10.09.1997**
(21) Numéro de dépôt: 91401470.9
(22) Date de dépôt: 05.06.1991
(51) Int. Cl.: G06F 15/16

(54) **Procédé de dialogue entre les processeurs d'un système, système pour sa mise en oeuvre et utilisation pour la répartition des processus aux processeurs**
Dialogverfahren zwischen den Prozessoren eines Systems, System zu seiner Durchführung und zu seinem Einsatz für die Verteilung von Prozessen auf Prozessoren
Dialog procedure between the processors of a system, system for implementation, and its use for partitioning the processes between the processors

(30) Priorité: 05.06.1990 FR 9006948
(43) Date de publication de la demande: 02.01.1992
(73) Titulaire: BULL S.A., 78430 Louveciennes (FR)
(72) Inventeur: Cassonnet, Jean-Claude, F-75116 Paris (FR); Fressineau, Jean-Louis, F-75116 Paris (FR); Lecourtier, Georges, F-75116 Paris (FR)
(74) Mandataire: Colombe, Michel

(56) Documents cités:
- EP-B- 0 030 504
- WO-A-84/03020
- WO-A-88/02149
- IBM TECHNICAL DISCLOSURE BULLETIN. vol. 29, no. 2, 2 Juillet 1986, NEW YORK US 'Interrupt driven queuing for communication between two processors '
- PATENT ABSTRACTS OF JAPAN vol. 13, no. 166 (E-746)20 Avril 1989 & JP-A-63 318 828

## Description

L'invention se situe dans le domaine des systèmes informatiques de type multiprocesseur et concerne les dialogues entre les processeurs d'un tel système.

Dans un système multiprocesseur, les processeurs doivent pouvoir communiquer entre eux dans de nombreuses circonstances pour assurer une certaine cohérence de fonctionnement. Pour cela, on prévoit des moyens permettant à deux processeurs quelconques de dialoguer. Le processeur qui initialise ce dialogue émet alors une requête à un autre processeur destinataire qui, pour signaler qu'il a pris en compte la requête envoie un acquittement destiné à l'émetteur. Ensuite, en réponse à la requête reçue, le processeur récepteur est généralement amené à interrompre les opérations qu'il effectuait avant réception de la requête. Ce dialogue entre processeurs permet de mettre en oeuvre ce qu'on appelle habituellement un mécanisme d'interruption.

Le dialogue entre processeurs intervient dans de nombreuses circonstances au cours de l'exploitation du système. L'ensemble de ces possibilités peut être subdivisé en deux catégories :
- les requêtes sélectives où un processeur émetteur adresse une requête à un processeur destinataire particulier ;
- les requêtes globales où un processeur adresse une requête simultanément à tous les autres processeurs du système.

Généralement, les envois de requêtes interviennent au cours de l'exécution d'opérations particulières du processeur émetteur et l'accomplissement de ces opérations est conditionné par la réception des acquittements fournis par les processeurs destinataires. Il en résulte qu'une opération impliquant l'envoi de requêtes comporte une phase de surveillance des acquittements reçus.

Dans ce but, une solution habituelle consiste, pour chaque requête, à interrompre l'opération en cours pour surveiller la réception de l'acquittement correspondant. Cette solution qui est la plus simple trouve son intérêt dans tous les cas où l'ordre de prise en compte par les processeurs destinataires doit être le même que celui de l'envoi des requêtes correspondantes. Or, très souvent, une telle synchronisation des processeurs récepteurs n'est pas nécessaire et la seule chose qui importe est que les processeurs récepteurs aient effectivement pris en compte leurs requêtes respectives. Dans ce cas, la solution habituelle évoquée précédemment n'est pas optimale pour la performance du système. En effet, l'intervalle de temps qui sépare l'envoi d'une requête et le moment où l'acquittement est reçu peut être relativement important car le processeur destinataire peut être en train d'exécuter une opération longue et non interruptible lorsque la requête est envoyée. Ce n'est que lorsque cette opération est complétement terminée que la requête pourra être prise en compte et que l'acquittement sera envoyé. Pendant tout ce temps, le processeur émetteur reste en attente. La dégradation de performance du système qui en résulte est toutefois limitée si, pour une opération quelconque, le nombre de requêtes multiples est lui-même limité et ceci est le cas si le nombre de processeurs du système est lui-même limité. Par contre, dans les systèmes comportant un nombre important de processeurs, la baisse de performance n'est plus négligeable à cause notamment des opérations de répartitions des processus aux processeurs (souvent appelées "dispatching") qui sont déclenchées d'autant plus souvent que le nombre de processeurs est élevé.

Aussi, l'invention a pour but de remédier à cet inconvénient en proposant un procédé de dialogue entre les processeurs du système qui réduit au maximum les temps d'attente des processeurs émetteurs de requêtes multiples émises au cours d'opérations qui n'impliquent aucune contrainte quant à l'ordre de prise en compte des requêtes par les proceseurs destinataires.

Dans ce but, l'invention a pour objet un procédé de dialogue entre les processeurs d'un système informatique multiprocesseur, ledit dialogue se produisant lorsque l'un desdits processeurs exécute des opérations déclenchant l'envoi de requêtes à destination d'au moins un autre processeur, chaque processeur destinataire envoyant au processeur émetteur un acquittement pour signaler qu'il prend en compte ladite requête, ledit procédé étant caractérisé en ce que pour toute opération n'impliquant aucune contrainte quant à l'ordre de prise en compte desdites requêtes par les processeurs destinataires, l'exécution de ladite opération se déroule sans tenir compte de la réception par le processeur émetteur d'acquittements provoqués par l'envoi de requêtes au cours de ladite opération, en ce qu'on calcule au cours de ladite opération le nombre total de requêtes qui sont ou doivent être envoyées par le processeur exécutant ladite opération, en ce qu'on compte le nombre d'acquittements reçus par le processeur émetteur et en ce que la fin de ladite opération est conditionnée par l'égalité entre ledit nombre total de requêtes et ledit nombre d'acquittements reçus.

Il est souhaitable que le procédé de dialogue proposé puisse s'intégrer facilement aux autres mécanismes d'échange prévus dans un système multiprocesseur. Aussi, selon une caractéristique secondaire du procédé, les requêtes et les acquittements ont la forme de message contenant une indication du type de message et notamment s'il s'agit d'un acquittement, la réception d'un acquittement par un processeur consistant à détecter qu'un message destiné à ce processeur a été envoyé et que ce message est un acquittement.

Généralement, un processeur comporte des moyens de traitement, le plus souvent microprogrammés, et des circuits d'interface séparés capables de mémoriser les messages reçus. Il est donc intéressant d'utiliser cette possibilité en parallélisant les opérations de traitement et le comptage des acquittements. Dans ce but et selon une autre caractéristique supplémentaire du procédé, le comptage du nombre d'acquittements reçus par un processeur est effectué indépendamment de la lecture des messages d'acquittement correspondant par les moyens de traitement du processeur et le nombre d'acquittements reçus est placé en permanence dans le dernier message reçu et qui est destiné aux moyens de traitement, le contrôle de l'égalité entre le nombre de requêtes et le nombre d'acquittements étant effectué par les moyens de traitement après la lecture du dernier message.

Souvent, la lecture des messages reçus s'accompagne de sa remise à zéro. Aussi, toujours pour faciliter l'intégration de l'invention dans le système et selon une autre caractéristique du procédé, la lecture du dernier message par les moyens de traitement provoque la remise à zéro du nombre d'acquittements, sous réserve qu'aucun nouvel acquittement ne survienne lors de cette lecture. Une fois cette lecture effectuée, le nombre de requêtes est diminué du nombre d'acquittements, l'égalité entre le nombre de requêtes et le nombre d'acquittements étant alors établie lorsque le nouveau nombre de requêtes ainsi calculé est égal à zéro.

Il faut enfin éviter que plusieurs dialogues déclenchés par plusieurs processeurs se produisent simultanément. Pour cela et selon encore un autre aspect, le procédé est caractérisé en ce que l'exécution par un processeur d'une opération susceptible de déclencher l'envoi de requêtes multiples n'est autorisée qu'après avoir testé l'état "libre" d'au moins un verrou système, auquel cas l'exécution effective de ladite opération est précédée de la mise à l'état "occupé" dudit verrou et en ce que ledit verrou est libéré lorsque ladite opération est terminée.

L'invention a également pour objet un système informatique permettant la mise en oeuvre du procédé. Ce système comporte une pluralité de processeurs pouvant dialoguer par l'intermédiaire de circuits d'interface associés respectivement auxdits processeurs et de liaisons reliant lesdits circuits d'interface entre eux, l'un au moins desdits processeurs comportant des moyens pour exécuter des opérations déclenchant l'envoi de requête à destination d'au moins un autre processeur, chaque processeur destinataire comportant des moyens pour envoyer au processeur émetteur un acquittement pour signaler qu'il prend en compte une requête qui lui est destinée, ledit système étant caractérisé en ce que ledit processeur émetteur de requêtes comporte :
- des premiers moyens de comptage permettant de déterminer le nombre total de requêtes qui sont ou doivent être émises au cours desdites opérations,
- des seconds moyens de comptage activés à chaque réception d'un acquittement,
- des moyens de comparaison pour détecter l'égalité entre ledit nombre de requêtes et le nombre d'acquittement reçus,
et en ce que, pour toute opération qui implique un dialogue sans contrainte quant à l'ordre de prise en compte des requêtes par les processeurs destinataires, ladite détection d'égalité autorise le processeur émetteur à terminer l'exécution de ladite opération.

D'autres caractéristiques et détails de réalisation pour la mise en oeuvre de l'invention, notamment pour réaliser les moyens de comptage, seront exposés dans la suite de la description.

Le procédé et le système selon l'invention peuvent avoir de multiples applications, chaque fois qu'une opération implique des requêtes multiples qu'elles soient sélectives ou globales. L'invention peut être utilisée non seulement pour les dialogues entre les processeurs d'exécution du système mais aussi pour effectuer des échanges entre ces processeurs d'exécution et les processeurs d'entrée-sortie.

Comme premier exemple d'application, on peut citer l'opération déclenchée par l'instruction "CLEAR" exécutée par un des processeurs et destinée à effacer le contenu des registres cachés de l'ensemble des processeurs. Cette opération implique l'envoi d'une requête globale donnant l'ordre aux autres processeurs d'effacer les contenus de ces registres. Conformément à l'invention, l'envoi des requêtes peut être effectué au début de l'opération. Ensuite, le processeur émetteur effectue l'effacement de ses propres registres et ensuite seulement il contrôle que les processeurs récepteurs ont bien reçu la requête.

Une autre application particulièrement importante de l'invention concerne la répartition des processus aux processeurs déjà évoqués précédemment. Ce problème a fait l'objet du brevet américain US 4 590 555 délivré le 20 mai 1986 et correspondant au brevet européen EP-B1-30504.

Sans revenir sur tous les détails de ce mécanisme, il convient cependant de rappeler que l'opération de répartition des processus aux processeurs est déclenchée par un évènement susceptible de provoquer une modification dans le choix des processus devant être exécutés. Cette opération SELECT détermine l'attribution des processus aux processeurs du système en fonction notamment d'un ordre de priorité des processus prêts à être exécutés.

Comme exemple d'évènement, on peut citer les opérations P ou V sur sémaphore susceptibles de provoquer l'interruption d'un processus en cours d'exécution ou de réactiver un processus en attente. Les opérations P et V sur sémaphore sont décrites dans le brevet américain US 4 374 409 délivré le 15 février 1983, correspondant au brevet français FR 2 253 420. Les sémaphores sont décrits dans le brevet américain US 4 395 757 délivré le 26 juillet 1983, correspondant au brevet français FR 2 253 418.

Ces brevets mentionnent l'existence dans le système d'une file d'attente Q/PR/RDY des processus prêts. Parmi ces processus certains sont actifs, c'est-à-dire en cours d'exécution dans un des processeurs tandis que d'autres sont en attente, c'est-à-dire qu'ils sont prêts à être exécutés mais attendent qu'un processeur leur soit attribué.

Ainsi au cours de l'opération SELECT, la file d'attente Q/PR/RDY est examinée et les processeurs sont attribués aux processus selon leur ordre de priorité jusqu'à épuisement des processus à attribuer ou des processeurs disponibles.

Au cours de l'opération SELECT, une requête est envoyée à chaque processeur sélectionné pour l'informer qu'un processus lui est attribué. Dès prise en compte de cette requête, le processeur destinataire envoie un acquittement au processeur effectuant l'opération SELECT.

L'opération SELECT peut donc utiliser le procédé de dialogue selon l'invention.

On peut se rendre compte de l'intérêt d'appliquer l'invention à cette opération en remarquant que la sélection des processeurs et des processus associés peut s'échelonner au cours d'une opération assez longue. Ceci est particulièrement le cas si le système est prévu pour affecter certains processus à un processeur particulier. Dans ce cas, l'opération de sélection comprend :
- une première étape au cours de laquelle sont traités les cas avec contrainte, c'est-à-dire : identification des processus affectés à des processeurs particuliers puis, pour chaque processus sélectionné incrémentation des premiers moyens de comptage et envoi d'une requête au processeur sélectionné ,
- une seconde étape de traitement des cas sans contrainte, c'est-à-dire : détermination des processus restant à affecter puis, pour chaque processus ainsi sélectionné incrémentation des premiers moyens de comptage et chargement dans une pile de son identité,
- une troisième étape de vidage de ladite pile au cours de laquelle, pour chaque processus extrait de la pile, une requête est envoyée à un processeur restant disponible.

D'autres aspects pour appliquer l'invention à la répartition des processus aux processeurs seront exposés plus en détails dans la suite de la description.
- La figure 1 représente le sous système central d'un système informatique pour la mise en oeuvre de l'invention ;
- la figure 2 représente les circuits d'interface d'un processeur du système lui permettant de dialoguer avec les autres processeurs ;
- la figure 3 représente un format de message pour le dialogue entre les processeurs ;
- la figure 4 représente une partie du circuit de réception de l'interface de la figure 2 ;
- les figures 5 à 8 représentent des détails de réalisation du circuit de la figure 4 ;
- les figures 9 et 10 sont des représentations schématiques du déroulement des opérations effectuant la répartition des processus aux processeurs ;
- les figures 11 et 12 représentent les principales ressources système utilisées pour effectuer la répartition des processus aux processeurs.

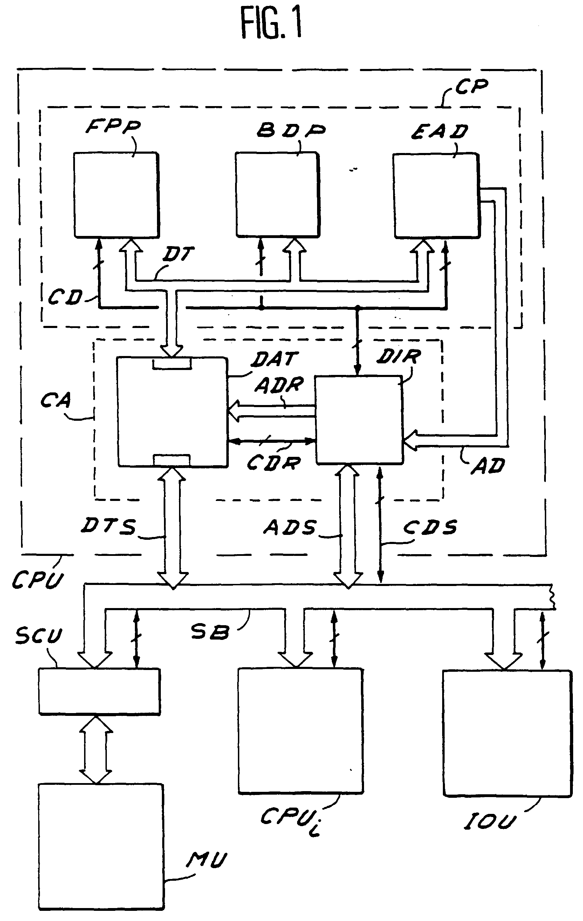

Le système représenté à la figure 1 constitue ce qu'on appelle un sous-système central d'un système informatique. Il est composé de plusieurs processeurs CPU, CPUᵢ reliés à un bus système SB de façon à pouvoir communiquer entre eux ainsi qu'avec une mémoire centrale MU et des unités d'entrée-sortie IOU. Les unités d'entrée-sortie IOU permettent au sous-système central de communiquer avec des sous-systèmes périphériques (non représentés).

La mémoire centrale MU peut être réalisée au moyen de plusieurs modules ou cartes mémoires reliées au bus système SB par l'intermédiaire d'un circuit d'interface SCU jouant à la fois le rôle de contrôleur mémoire et de contrôleur du bus SB. De façon classique, le bus SB est constitué d'un bus de données DTS, d'un bus d'adresses ADS et de lignes de commande et de contrôle CDS.

Chaque processeur CPU comporte essentiellement des moyens de traitement microprogrammés CP et une antémémoire CA servant d'interface avec le bus système SB. L'antémémoire CA est composé de circuits mémoire DAT reliés au bus de donnée DTS et d'un contrôleur DIR relié au bus d'adresse ADS et aux lignes de contrôle CDS. Les moyens de traitement CP comportent plusieurs unités fonctionnelles EAD, BDP, FPP affectées respectivement à des fonctions spécifiques. En particulier l'unité EAD est une unité d'adressage reliée au contrôleur DIR par des lignes d'adresse AD. Les unités EAD, BDP, FPP sont d'autre part reliées au circuit mémoire DAT par un bus de données internes DT et au contrôleur DIR par des lignes de commande et de contrôle internes CD.

Le contrôleur DIR commande les opérations de lecture et d'écriture des circuits mémoire DAT par les lignes d'adresse ADR et de contrôle CDR. Il sert également à commander les opérations de lecture et d'écriture de la mémoire centrale MU pour effectuer les transferts de données entre la mémoire MU et les circuits mémoire DAT. Enfin, selon le mode de réalisation présenté, le contrôleur DIR contient également les circuits d'interface servant aux échanges de messages (par exemple requêtes et acquittements) entre le processeur CPU et les autres processeurs CPUᵢ ou avec les unités d'entrée-sortie IOU.

En dehors de ce qui concerne les échanges de messages entre processeurs, le système de la figure 1 se comporte comme un système classique. Il est donc inutile de décrire les aspects connus de son fonctionnement pour se consacrer dans la suite de la description aux aspects directement liés à l'invention.

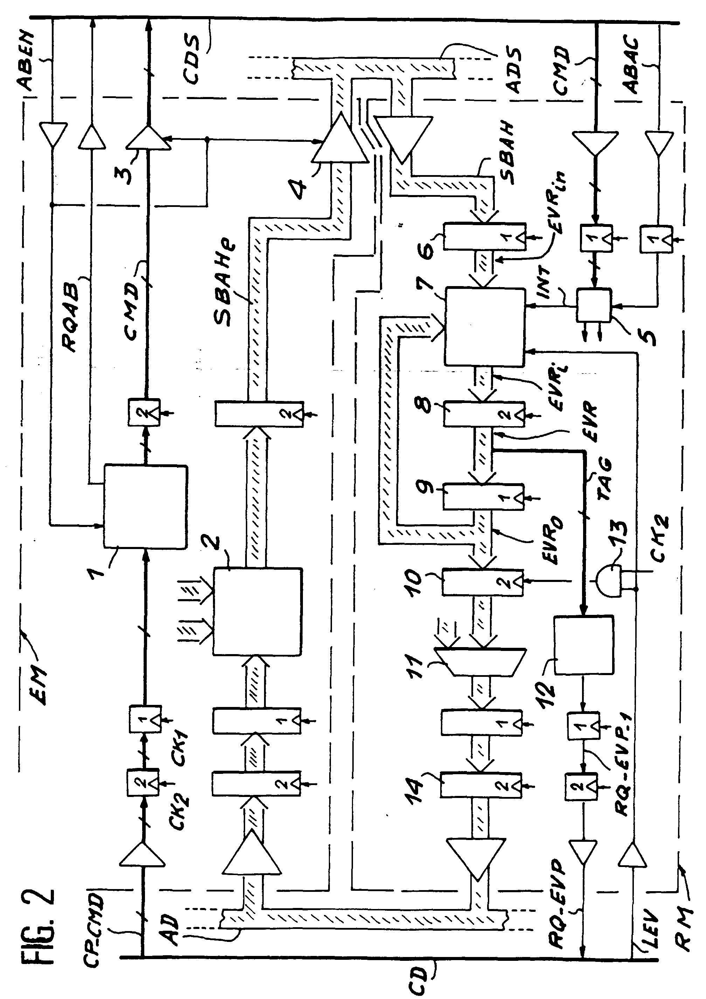

Le mode de réalisation qui va être décrit se concrétise tout d'abord par des circuits particuliers du contrôleur DIR pour la transmission des messages. Ces circuits vont être présentés en référence à la figure 2.

Selon le mode de réalisation proposé, les messages échangés entre l'interface DIR et d'une part les moyens de traitement CP et d'autre part les autres processeurs sont véhiculés au moyen des bus d'adresse, respectivement AD et ADS. La transmission des messages entre le processeur CPU et les autres processeurs utilise un circuit d'émission EM et un circuit de réception RM du contrôleur DIR. Ces circuits fonctionnent en deux phases définies par des signaux de synchronisation CK1 et CK2 délivrés par une horloge non représentée.

Le circuit d'émission EM comporte une partie commande constituée essentiellement d'un circuit 1 de décodage et de commande d'émission dont l'entrée reçoit les signaux CP-CMD issus de certaines des lignes de contrôle CD après amplification et verrouillage dans des registres (les références 1 et 2 indiquent qu'ils sont synchronisés respectivement par CK1 et CK2). Le circuit 1 fournit un signal RQAB de requête du bus système qui est envoyé après amplification sur l'une des lignes de contrôle CDS à destination du contrôleur de bus SCU. Le circuit 1 reçoit d'autre part, après amplification, un signal ABEN d'autorisation, issu du contrôleur SCU par une des lignes CDS. Le circuit 1 délivre enfin, par l'intermédiaire d'un registre synchronisé par CK2, des signaux de commande CMD appliqués à l'entrée d'un amplificateur 3 dont la sortie est reliée à des lignes de contrôle CDS. L'amplificateur 3 est commandé par le signal ABEN.

Le circuit d'émission EM comporte d'autre part une partie de transfert des adresses (utilisée également pour le transfert des messages) comportant un multiplexeur 2 dont une des entrées est reliée au bus AD par l'intermédiaire d'un amplificateur et de registres. Les autres entrées du multiplexeur 2 sont reliées à des registres d'adresse utilisés par le contrôleur DIR pour réaliser les fonctions classiques d'adressage de la mémoire centrale MU. La sortie du multiplexeur 2 est reliée au bus ADS par l'intermédiaire d'un registre synchronisé par CK2, des lignes SBAHe et d'un amplificateur 4 commandé par le signal ABEN.

Le circuit d'émission EM fonctionne de la façon suivante. Lorsque les moyens de traitement CP doivent émettre un message à destination d'un autre processeur CPUᵢ, ils vérifient d'abord si l'interface DIR est disponible en contrôlant un signal d'occupation des registres d'entrée (non représenté). Si c'est le cas, ils positionnent les lignes de commande CP-CMD à un profil binaire donné et placent le message sur le bus AD. Comme nous le verrons ultérieurement, le message comporte une indication du numéro du processeur destinataire. Après deux phases d'horloge CK2, CK1, la commande CP-CMD est décodée par le circuit 1 qui délivre alors le signal de requête RQAB. Ce signal est reçu par le contrôleur de bus SCU qui, en réponse, fournit le signal d'autorisation ABEN lorsque le bus SB est disponible. La présence de ce signal a pour effet d'une part de valider les amplificateurs 3 et 4 et d'autre part de remettre à zéro la sortie du circuit 1 de commande d'émission. Il en résulte que les signaux CMD et SBAHe sont placés respectivement sur les lignes CDS et sur le bus ADS. Ils apparaissent alors à l'entrée des circuits de réception des interfaces des processeurs, y compris le processeur émetteur.

Avant d'expliquer le fonctionnement à la réception, il convient de décrire les circuits de réception CD. Comme pour le circuit d'émission, le circuit de réception comporte une partie commande qui comprend un circuit 5 de détection recevant par l'intermédiaire d'amplificateurs et de registres synchronisés par CK1, les signaux CMD et ABAC issus des lignes CDS. Les signaux CMD sont les signaux de commande définis précédemment pouvant provenir de n'importe quel processeur. Le signal ABAC est un signal d'occupation du bus adresse généré par le contrôleur de bus SCU et reçu par chaque processeur.

Le circuit de détection 5 comporte un décodeur à plusieurs sorties, chaque sortie correspondant à un profil binaire particulier du signal CMD. En particulier, la sortie INT est validée lorsque le signal CMD correspond à un envoi de message.

La partie de transfert des messages du circuit de réception RM comporte un registre d'entrée 6 synchronisé par CK1, dont l'entrée est reliée par l'intermédiaire des lignes SBAH et d'un amplificateur au bus d'adresse ADS. La sortie EVRᵢₙ du registre 6 est reliée à l'entrée d'un circuit d'écriture et d'incrémentation 7. La sortie EVRᵢ du circuit 7 est reliée à l'entrée d'un ensemble de trois registres 8, 9, 10 montés en cascade et synchronisés respectivement par des signaux d'horloge CK2, CK1, CK2. La sortie EVRₒ du registre 9 est reliée à une seconde entrée du circuit 7. La sortie du registre 10 est reliée au bus d'adresse interne AD par l'intermédiaire d'un multiplexeur 11, de deux registres synchronisés respectivement par CK1 et CK2 et d'un amplificateur.

Le circuit de réception RM comporte enfin une partie contrôle pour l'échange de signaux avec les moyens de traitement CP du processeur. Elle comprend un décodeur 12 recevant en entrée une partie TAG des lignes de sortie EVR du registre 8. Les lignes TAG correspondent à une zone du message dont la valeur est représentative de la catégorie du message reçu. La sortie du décodeur 12 fournit par l'intermédiaire de deux bascules synchronisées respectivement par CK1 et CK2 et d'un amplificateur le signal RQ-EVP qui est appliqué à l'une des lignes de commande interne CD. Le signal RQ-EVP signale pour un état logique déterminé qu'un message destiné au processeur est en attente. Une autre des lignes CD fournit un signal de commande de lecture LEV qui, après amplification, est appliqué d'une part à une entrée de commande du circuit 7 et d'autre part à l'entrée d'horloge du registre 10 par l'intermédiaire d'une porte de synchronisation 13 validée par le signal d'horloge CK2.

Le circuit de réception RM fonctionne de la façon suivante. Lorsqu'un message a été placé sur les lignes d'adresse ADS conformément au mécanisme d'émission décrit précédemment, le contrôleur de bus SCU place le signal ABAC à une valeur logique déterminée. Ce signal ABAC valide le circuit de détection 5 qui effectue le décodage du signal de commande CMD. Si le profil logique du signal CMD correspond à un envoi de message, le circuit 5 place sa sortie INT à un état logique déterminé. Ce signal valide le fonctionnement du circuit 7 qui effectue l'analyse du message présent dans le registre 6. S'il est destiné au processeur, ce message est transféré dans le registre 8. La présence d'un message est à nouveau détectée par le décodeur 12 qui délivre le signal RQ-EVP signalant l'existence du message en attente.

Une fois que les moyens de traitement CP ont pris en compte le signal RQ-EVP, ils émettent en phase CK1 le signal de commande de lecture LEV qui provoque en phase CK2 suivante le chargement du message dans le registre 10. D'autre part, le signal LEV commande le circuit 7 pour qu'il effectue la remise à zéro du registre 8. Au cycle CK2 suivant, le message se trouve dans le registre de sortie 14 et pourra être lu par les moyens de traitement CP.

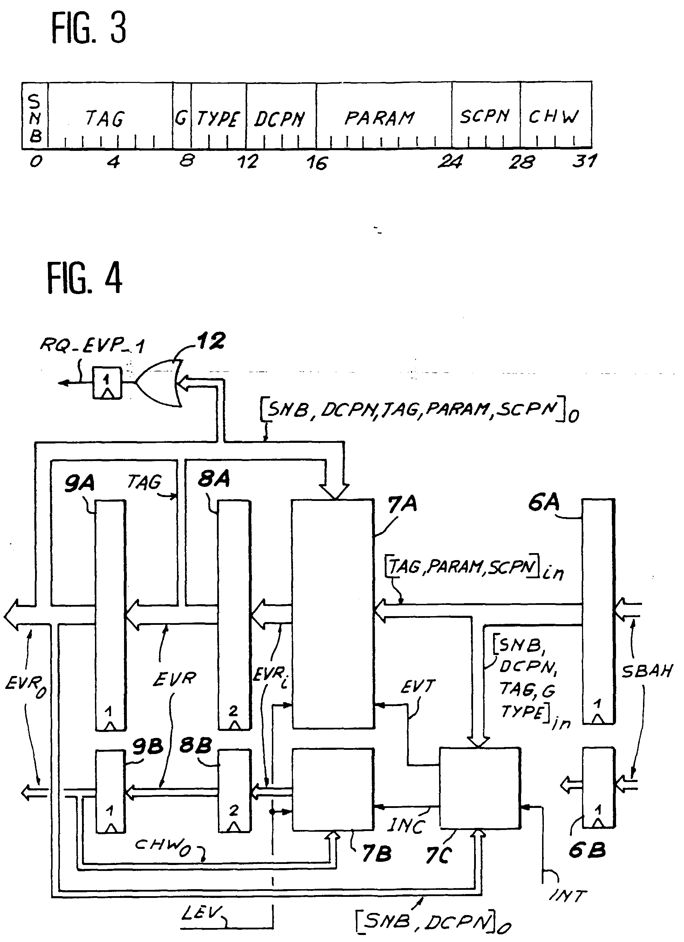

La réalisation et le fonctionnement détaillés du circuit 7 sera décrit en référence aux figures 4 à 8 mais il convient auparavant de donner quelques précisions sur le format des messages.

La figure 3 représente à titre d'exemple non limitatif un format de message pouvant être utilisé dans la présente invention pour un système à 16 processeurs. Le message a une largueur de 32 bits, numérotés de 0 à 31 et il est subdivisé en plusieurs champs ayant les significations suivantes :
- le champ SNB (bit 0) correspond au numéro de système auquel appartiennent les processeurs pour le message considéré. Ce champ a été -prévu pour pouvoir faire fonctionner le système comme deux sous-systèmes indépendants ;
- le champ TAG (bits 1 à 7) est réservé pour définir la catégorie du message. Ce champ permet notamment d'indiquer si le message est destiné à un processeur, si le message est issu d'un autre processeur ou d'un contrôleur d'entrée-sortie ou du contrôleur de bus ;
- le champ G (bit 8) sert à indiquer si le message est une requête globale, c'est-à-dire destinée à tous les processeurs du système ;
- le champ TYPE (bitS 9 à 11) sert à identifier la requête, c'est-à-dire contient l'identité de l'action à exécuter par le processeur récepteur ;
- le champ DCPN (bits 12 à 15) contient le numéro du processeur destinataire du message ;
- le champ PARAM (bits 16 à 23) est un champ réservé pour des extensions de certains des autres champ du message ;
- le champ SCPN (bits 24 à 27) contient le numéro du processeur émetteur ;
- le champ CHW (bits 28 à 31) est un champ réservé pour contenir le nombre d'acquittements reçus.

La figure 4 représente de façon plus détaillée le circuit d'écriture et d'incrémentation 7, les registres 6, 8 et 9 ainsi que le décodeur 12. Pour plus de clarté, les registres 6, 8 et 9 sont chacuns subdivisés en deux parties, respectivement 6A-6B, 8A-8B et 9A-9B, la lettre B correspondant au champ CHW et la lettre A correspondant au reste du message. D'autre part, les différents champs impliqués dans ce circuit sont affectés des indices in ou o pour indiquer qu'ils sont issus respectivement du registre d'entrée 6 ou du registre 9.

Nous avons déjà indiqué que l'entrée SBAH du registre 6 est reliée au bus ADS. Cependant, lorsque les données véhiculées par le bus ADS sont des messages, les bits 28 à 31 correspondant au champ CHW ne sont pas significatifs. Par conséquent, la partie 6B du registre 6 n'est pas utilisée pour le traitement des messages.

Le circuit 7 est constitué d'un circuit d'écriture 7A, d'un circuit d'incrémentation 7B et d'un circuit d'analyse des messages reçus 7C. Une première entrée du circuit 7C est reliée aux lignes de sortie du registre 6 qui correspondent aux champs SNB, DCPN, TAG et TYPE. Une seconde entrée du circuit 7C est reliée aux lignes de sortie du registre 9 qui correspondent aux champs SNB et DCPN. Le fonctionnement du circuit 7C est validé par le signal INT issu du circuit de détection 5 décrit précédemment. Le circuit 7C comporte une première sortie EVT reliée au circuit d'écriture 7A et fournissant un signal de commande d'écriture. Une seconde sortie INC du circuit 7C fournit un signal de commande d'incrémentation appliqué au circuit d'incrémentation 7B.

Une première entrée du circuit 7A reçoit les lignes de sortie du registres 6 qui correspondent aux champs TAG, PARAM et SCPN. Une seconde entrée reçoit les champs SNB, DCPN, TAG, PARAM et SCPN issus du registre 9. Le circuit 7A reçoit également le signal de commande de lecture LEV. La sortie du circuit 7A est appliquée à l'entrée de la partie 8A du registre 8.

Une entrée du circuit d'incrémentation 7B est reliée à la sortie de la partie 9B du registre 9 qui est affectée au champ CHW. Le circuit 7B reçoit d'autre part le signal d'incrémentation INC ainsi que le signal de commande de lecture LEV. Sa sortie est reliée à l'entrée de la partie 8B du registre 8.

Les lignes de sortie du registre 8 qui correspondent au champ TAG sont reliées à l'entrée du décodeur 12 dont la sortie est reliée à l'entrée d'une bascule synchronisée par CK1 fournissant en sortie le signal RQ-EVP-1.

Le circuit de la figure 4 fonctionne de la façon suivante. Lorsqu'un message a été chargé en phase CK1 dans le registre 6, la présence de ce message est signalée par le signal INT. Le circuit d'analyse 7C détecte si ce message est bien destiné au processeur en comparant les champs SNB et DCPN contenus respectivement dans le registre 6 et dans le registre 9. Par décodage des champs TAG et G, il détecte d'autre part s'il s'agit d'une requête à destination d'un processeur. Si c'est le cas, il active le signal EVT. D'autre part, en fonction du champ TYPE, le circuit 7C détermine si ce message est un acquittement, auquel cas il active le signal de commande d'incrémentation INC.

Si les signaux de commande d'écriture EVT et de commande de lecture LEV sont inactifs, le circuit 7A effectue la recopie du contenu de la partie 9A du registre 9 dans la partie 8A du registre 8.

Si les signaux EVT et LEV sont actifs simultanément, le circuit 7A effectue la recopie du contenu de la partie 6A du registre 6 dans la partie 8A du registre 8.

Si le signal LEV est actif alors que le signal EVT est inactif, le circuit 7A remet à zéro la partie 8A du registre 8.

Si le signal d'incrémentation INC est actif alors que le signal de lecture LEV est inactif, le circuit d'incrémentation 7B recopie dans la partie 8B le contenu de la partie 9B augmenté de 1.

Si les signaux INC et LEV sont inactifs simultanément, le circuit 7B recopie le contenu de la partie 9B dans la partie 8B.

Si les signaux INC et LEV sont actifs simultanément, le circuit 7B force à 1 le bit de poids faible de la partie 8B et remet tous les autres bits à zéro.

Selon l'exemple de réalisation décrit, le champ TAG comporte l'un de ses bits à 1 lorsque le message correspond à des communications entre processeurs. Le décodeur 12 peut donc être réalisé au moyen d'une simple porte OU dont la sortie est mise à 1 si le message contenu dans le registre 8A est une requête ou un acquittement.

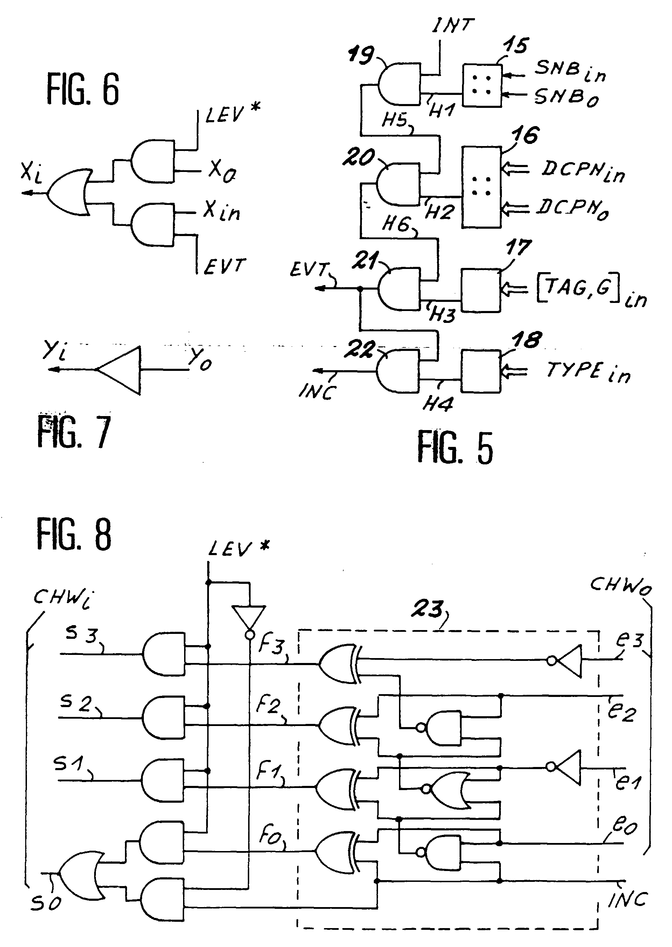

Les figures 5 à 8 représentent de façon plus détaillée les différents sous-ensembles du circuit 7. Chaque signal binaire représenté sur ces figures est supposé actif lorsqu'il prend la valeur 1 logique.

La figure 5 représente le circuit d'analyse des messages reçus 7C. Il comprend un premier comparateur 15 pour comparer les numéros de système SNBᵢₙ et SNBₒ contenus respectivement dans le message reçu et dans le registre 9. Un deuxième comparateur 16 compare les numéros de processeurs DCPNᵢₙ et DCPNₒ contenus respectivement dans le message reçu et dans le registre 9. En cas de coïncidence, les sorties H1 et H2 des comparateurs 15 et 16 prennent la valeur 1. Un décodeur 17 reçoit les champs TAG et G du message reçu et délivre un signal de sortie H3 à 1 lorsqu'un des bits de ces champs est à 1, signalant ainsi que l'information contenue dans le registre 6 est un message devant être pris en compte par le processeur. Un second décodeur 18 reçoit le champ TYPE du message reçu et délivre un signal H4 prenant la valeur 1 lorsque la valeur de ce champ est représentative d'un acquittement.

Une première porte ET 19 recevant en entrée les signaux H1 et INT a sa sortie reliée à l'entrée d'une seconde porte ET 20, dont la seconde entrée reçoit le signal H2. Ainsi, l'état logique de la sortie H6 de la porte 20 indique si le message reçu est bien destiné au processeur. Une troisième porte ET 21 reçoit en entrée les signaux H6 et H3 et fournit en sortie le signal EVT qui, lorsqu'il prend la valeur 1 signifie que le message présent dans le registre 6 est destiné à un processeur et que ce processeur est bien celui du circuit de réception.

Finalement, les signaux EVT et H4 sont appliqués à l'entrée de la porte ET 22 dont le signal de sortie INC prend en compte la condition supplémentaire que le message reçu est un acquittement.

Les figures 6 et 7 représentent des cellules de base permettant de réaliser les circuits d'écriture 7A, chaque cellule étant affectée à un bit du message. Ces cellules sont de deux types selon que les bits correspondants sont susceptibles d'être chargés à partir du registre d'entrée 6 ou qu'une simple recopie des bits correspondant du registre 9 est effectuée.

Le circuit de la figure 6 correspond au premier cas, c'est-à-dire concerne les bits des champs TAG, PARAM, SCPN. Chaque bit de ces champs a été désigné par la lettre X affectée des indices o ou in selon qu'ils proviennent respectivement du registre 9 ou du registre 6. Le bit de sortie correspondant est désigné par Xᵢ. La cellule de la figure 6 comporte une première porte ET recevant en entrée le signal EVT et le bit Xᵢₙ. Une deuxième porte ET reçoit en entrée le signal LEV*, complément du signal LEV et le bit Xₒ. Les deux sorties de ces portes ET sont appliquées à l'entrée d'une porte OU dont la sortie fournit le bit Xᵢ.

Il est facile de vérifier que le circuit de la figure 6 réalise bien la fonction annoncé lors de la description de la figure 4. Si LEV = 1 et EVT = 0, Xᵢ = 0. Si LEV = 0 et EVT = 0, on a Xᵢ = Xₒ. Si LEV = 1 et EVT = 1, Xᵢ = Xᵢₙ. Le cas où LEV = 0 et EVT = 1 correspond à un cumul des informations.

La cellule de la figure 7 concerne seulement les bits des champs SNB et DCPN et permet d'effectuer en permanence la recopie de ces champs dans le registre 8. Ces champs sont normalement chargés à l'initialisation du système au moyen de circuits de maintenance qui n'ont pas été représentés sur les figures pour des raisons de clarté.

Il convient de noter que la réalisation du circuit d'écriture qui vient d'être décrite est en partie liée à un choix qui a été fait sur la signification et l'usage de certains champs du message. En particulier, en l'absence d'une commande de lecture LEV, le circuit de la figure permet d'effectuer le cumul de certaines informations présentes dans le registre 9 avec d'autres informations contenues dans le message reçu. Par exemple, chaque position binaire du champ PARAM correspond à une fonction particulière qui doit être exécutée par le processeur récepteur lorsqu'elle est à 1.

La figure 8 représente une réalisation du circuit d'incrémentation 7B. Il comprend un circuit d'addition 23 recevant en entrée les quatre bits e0, e1, e2, e3 du champ CHW du registre 9 ainsi que le signal d'incrémentation INC. Le circuit 23 fournit les bits f0, f1, f2, f3 représentant le nombre CHWₒ si INC = 0 ou CHWₒ + 1 si INC = 1. Le circuit fournit en sortie les bits s0, s1, s2, s3 correspondant au champ CHW et appliqués à l'entrée de la partie 8B. Les bits s1, s2, s3 sont délivrés chacun par une porte ET dont une entrée reçoit respectivement les signaux f1, f2, f3 et dont l'autre entrée reçoit le signal LEV*. Le bit s0 est fourni par une porte logique complexe identique au circuit de la figure 6. La première porte ET de ce circuit reçoit en entrée le signal LEV* et le signal f0, tandis que la seconde porte ET reçoit en entrée le signal LEV et le signal INC.

En fonctionnement, lorsque LEV = 0, les bits s0, s1, s2, s3 reproduisent respectivement les signaux f0, f1, f2, f3. Si LEV = 1, les bits s1, s2, s3 sont forcés à 0 , de même que le bit s0 si INC = 0. Si par contre INC = 1, s0 est forcé à 1.

Bien entendu, la réalisation qui vient d'être décrite pourrait faire l'objet de diverses variantes ou adaptation sans pour cela sortir du cadre de l'invention. En particulier, le champ CHW pourrait comporter plus de quatre bits, le circuit d'incrémentation étant modifié en conséquence, pour les systèmes comportant plus de 16 processeurs.

Nous allons maintenant décrire comment le procédé selon l'invention peut être exploité pour la mise en oeuvre du mécanisme de répartition des processus aux processeurs dans un système multiprocesseur. Auparavant, il convient de donner quelques indications sur les moyens permettant la mise en oeuvre de ce mécanisme. Ces moyens se situent essentiellement dans la ou les unités de traitement du processeur. Ces unités peuvent être du type microprogrammé tel que décrit dans la demande de brevet français numéro 89 16952, déposée le 21 décembre 1989 et ayant pour titre "Processeur à plusieurs unités microprogrammées avec mécanisme d'exécution anticipée des instructions".

Un processeur de ce type comporte au moins un bloc de commande capable d'exécuter un ensemble de microprogrammes (micrologiciel). Ce bloc de commande comprend un microséquenceur adressant une mémoire de microprogramme dont chaque mot de sortie constitue une microinstruction agissant sur certaines ressources (opérateurs, registres, etc...) du processeur.

Une partie du micrologiciel sert à l'interprétation des instructions exécutables par le processeur. Le reste du micrologiciel, qu'on appelle généralement "micrologiciel système" est composé d'un certain nombre de modules destinés chacuns à effectuer des opérations de gestion du système. C'est parmi ce micrologiciel système que se trouvent les modules qui effectuent la répartition des processus aux processeurs. Un autre module important, appelé "gestionnaire d'interruption" EVP sert à sélectionner les modules à exécuter en fonction d'un certain nombre d'indicateurs représentatifs d'évèvements susceptibles d'être pris en compte par le système. Le gestionnaire d'interruption EVP est sollicité par une partie câblée du bloc de commande qui, en réponse à un signal de détection RQ-EVP d'un tel évènement, force l'adresse de la mémoire de microprogramme à une valeur déterminée AD-EVP de façon à effectuer un branchement sur le module EVP.

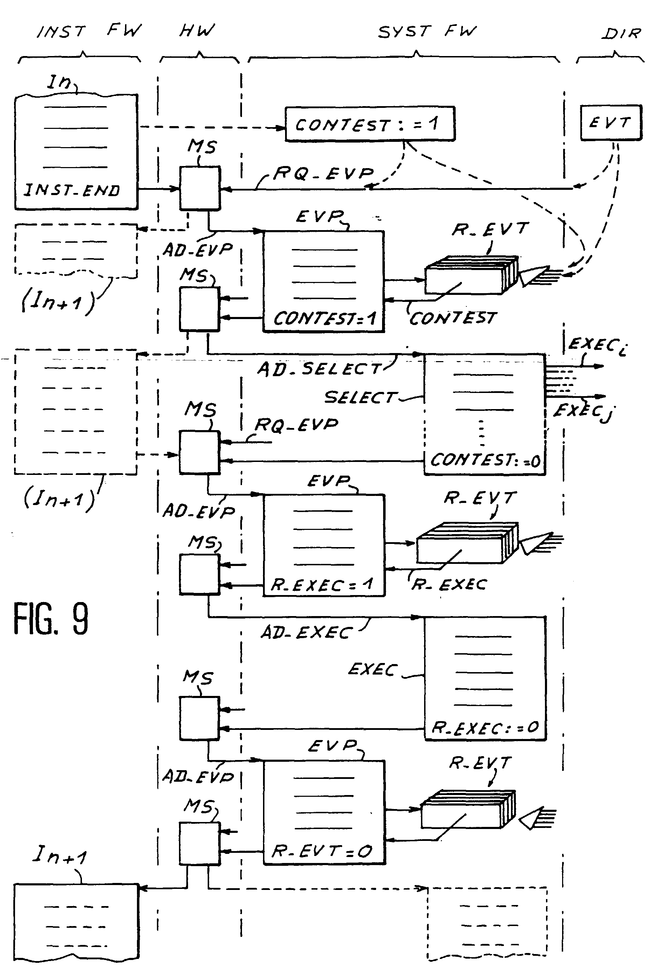

La figure 9 est une représentation schématique du fonctionnement d'un processeur dans lequel est déclenché une répartition des processus aux processeurs. Sur cette figure sont symbolisées de gauche à droite les quatre parties du processeur : le micrologiciel d'interprétation des instructions INST FW, les circuits logiques câblés HW, le micrologiciel système SYST FW et l'interface DIR. Les opérations se déroulent de haut en bas et on suppose qu'initialement le processeur est en train d'exécuter une instruction Iₙ qui provoque une remise en cause de la répartition des processus aux processeurs. Ce phénomène se concrétise par la mise à 1 d'un indicateur CONTEST (CONTEST : = 1). Cet indicateur correspond en pratique à l'état logique d'une bascule dans un des registres R-EVT réservés au micrologiciel. En parallèle, d'autres évènements EVT provenant par exemple de l'extérieur par l'intermédiaire de l'interface DIR peuvent se produire. De la même façon que les événements internes, ces événements extérieurs positionnent un indicateur représentatif de l'événement qui s'est produit.

L'apparition d'un tel événement se traduit par un signal RQ-EVP reçu par le microséquenceur MS du bloc de commande. Dès que le processeur se trouve dans un état interruptible, dans le cas présent en fin d'instruction INST-END, le microséquenceur MS effectue un branchement AD-EVP vers le gestionnaire d'interruption EVP. Ce dernier effectue l'analyse de tous les événements enregistrés précédemment en consultant les registres d'événements R-EVT selon un ordre de priorité déterminé. Dès que le gestionnaire EVP détecte un événement à traiter, par exemple l'état 1 de l'indicateur CONTEST, il commande le microséquenceur MS de façon à adresser la mémoire de microprogramme au point d'entrée AD-SELECT du module SELECT d'exécution de la répartition des processus aux processeurs.

Le module SELECT effectue alors l'analyse de la file d'attente des processus prêts Q/PR/RDY et en fonction des priorités et de l'ordre d'arrivée des processus en attente ainsi que de l'état des processeurs et des éventuelles contraintes liées aux processus, il provoque l'envoi à destination des processeurs CPUᵢ, CPUⱼ sélectionnés de requêtes correspondantes EXECᵢ, EXECⱼ pour les informer qu'ils doivent effectuer un changement de contexte, c'est-à-dire qu'ils doivent se mettre en état pour exécuter un autre processus déterminé par le module SELECT.

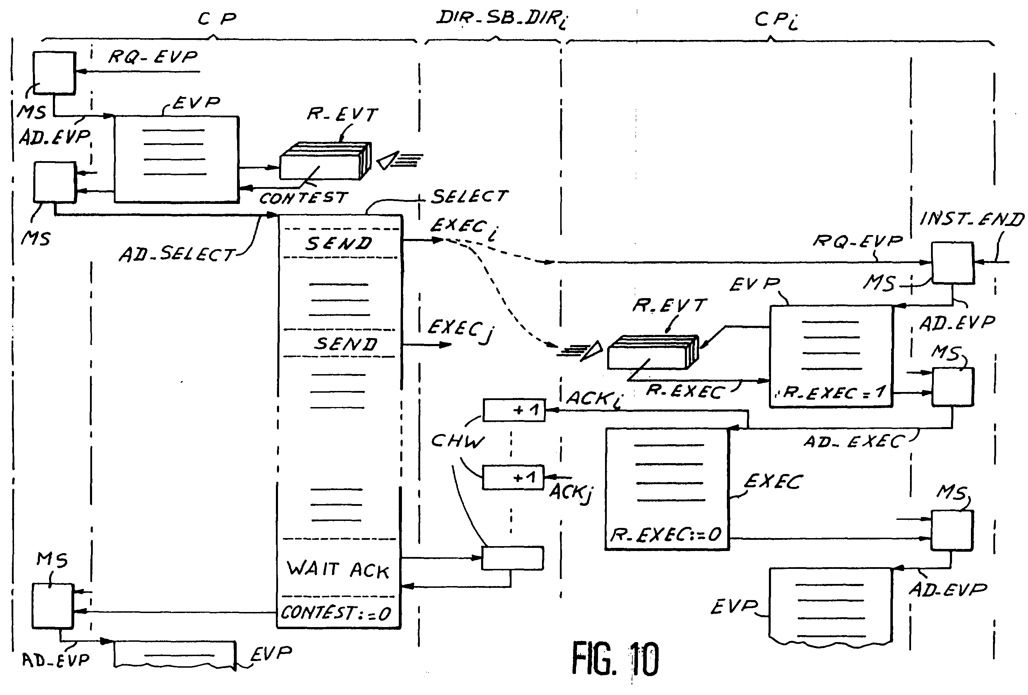

Au fur et à mesure que les processeurs destinataires prennent en compte les requêtes EXECᵢ, ils envoient en réponse les acquittements qui sont comptabilisés dans le circuit de réception de l'interface DIR selon le mécanisme qui a été décrit précédemment. A la fin de son exécution, le module SELECT consulte le registre 10 du circuit de réception par l'envoi du signal de commande de lecture LEV et compare sa valeur avec le nombre de requêtes EXECᵢ qui ont été envoyées. Nous verrons plus en détails ces opérations en référence à la figure 10.

La dernière étape du module SELECT consiste à remettre à zéro l'indicateur CONTEST (CONSTEST : = 0). Le microséquenceur MS se rebranche alors à l'entrée du gestionnaire d'interruption EVP qui analyse à nouveau les registres d'événements R-EVT. Si d'autres événements ont été signalés, par exemple si le processeur s'est envoyé à lui-même une requête EXEC, le gestionnaire d'interruption EVP commande alors le branchement au point d'entrée AD-EXEC du module EXEC de changement de contexte. En fin d'exécution de ce module, l'indicateur R-EXEC est remis à zéro (R-EXEC = 0) et le microséquenceur se branche à nouveau à l'entrée du gestionnaire d'interruption EVP. S'il ne détecte aucun autre événement à traiter (R-EVT = 0), le microséquenceur MS se branche au point d'entrée du microprogramme d'exécution de l'instruction suivante Iₙ₊₁. Bien entendu l'instruction Iₙ₊₁ correspond à la première instruction en attente du nouveau processus exécuté par le processeur.

La figure 10 est une représentation analogue à la figure 9 qui montre plus particulièrement les opérations respectives effectuées par un processeur CPU émetteur de requêtes et un des processeurs destinataires CPUᵢ.

Nous retrouvons à gauche et à droite de la figure respectivement les moyens de traitement CP et CPᵢ des deux processeurs concernés, tandis que la partie centrale symbolise les interfaces DIR et DIRᵢ correspondantes ainsi que le bus système SB.

Comme précédemment, nous supposons que l'exécution du module SELECT est déclenchée dans le processeur CPU par l'intermédiaire du gestionnaire d'interruption EVP. Cette exécution qui implique de nombreux accès mémoire peut être subdivisée en deux phases principales : une première phase est consacrée aux processus avec contraintes s'il en existe, tandis que la deuxième phase traite les autres cas, c'est-à-dire concerne les processus pouvant être exécutés sur n'importe quel processeur. D'autre part, l'opération SELECT comptabilise le nombre total de requêtes EXECᵢ qui doivent être envoyées.

A chaque fois qu'une affectation d'un processus déterminé doit être notifiée à un processeur déterminé CPUᵢ, le module SELECT effectue une opération SEND qui normalement aboutit à l'envoi d'une requête EXECᵢ au processeur concerné. Comme nous l'avons déjà indiqué, cette requête prend la forme d'un message qui transite par l'interface DIR du processeur émetteur. Ce message est ensuite transmis par les lignes d'adresse du bus système SB et il est enfin reçu par toutes les interfaces DIRᵢ des processeurs. Grâce au champ de destinataire DCPN, l'interface DIRᵢ du processeur destinataire charge le message dans ses registres et informe les moyens de traitement CPᵢ par le signal RQ-EVP.

Comme nous l'avons expliqué lors de la description de la figure 9, le signal RQ-EVP provoque en fin d'exécution d'une instruction l'appel du gestionnaire d'interruption EVP qui effectue la consultation des registres d'évènements R-EVT. En particulier, le gestionnaire EVP effectue la lecture par le signal LEV de la requête qui a été signalée. Le gestionnaire EVP détecte alors que la requête est une demande d'exécution du module EXEC. Le microséquenceur se branche alors à l'entréee AD-EXEC de ce module et simultanément l'envoi d'un message d'acquittement ACKᵢ est effectué conformément au procédé qui a été décrit précédemment. Il en résulte en particulier que le compteur d'acquittements CHW du processeur émetteur de la requête EXECᵢ est augmenté d'une unité (en supposant que le compteur n'est pas consulté à ce moment). Le processeur CPUᵢ entame alors l'exécution du module EXEC conformément à la description qui en a été donnée dans le brevet US 4 590 555. Cette opération implique la consultation d'une boîte aux lettres affectée au processeur dans laquelle le processeur émetteur à inscrit au cours de l'opération SEND toutes les indications nécesssaires au processeur récepteur, en particulier l'identité ou numéro NJP du nouveau processus à exécuter.

Lorsque CPUᵢ a terminé toutes les mises à jour et le changement de son contexte, il replace l'indicateur R-EXEC à zéro (R-EXEC : = O) et se branche à nouveau à l'entrée du gestionnaire d'interruption EVP afin de vérifier si d'autres événements sont à prendre en compte.

Après l'envoi de la requête EXECᵢ, le processeur émetteur CPU continue l'exécution du module SELECT indépendamment des opérations effectuées dans les autres processeurs, en particulier sans attendre la réception de l'acquittement ACKᵢ. Lorsque l'opération SELECT est sur le point de se terminer, c'est-à-dire lorsque chaque processus en attente d'exécution a été attribué à un processeur ou lorsque chaque processeur est affecté à un processus, le module SELECT effectue l'opération WAIT ACK qui consiste à consulter l'état du compteur CHW et à comparer sa valeur à celle du compteur micrologiciel CFW indiquant le nombre de requêtes émises vers les autres processeurs. En cas de coïncidence, l'opération SELECT est terminée. L'indicateur CONTEST est alors remis à zéro et le processeur se branche à l'entrée du gestionnaire d'interruption EVP. Si par contre, le nombre d'acquittements reçus est inférieur au nombre de requêtes émises, le compteur micrologiciel est décrémenté du nombre de requêtes déjà reçues (état du compteur CHW) et le module SELECT se place sur une boucle d'attente qui effectue périodiquement la consultation du compteur CHW. L'attente se prolonge jusqu'à l'égalité des deux compteurs. Bien entendu, cette boucle d'attente est assortie d'un mécanisme de surveillance déclenchant une opération d'exception au bout d'une durée d'attente déterminée.

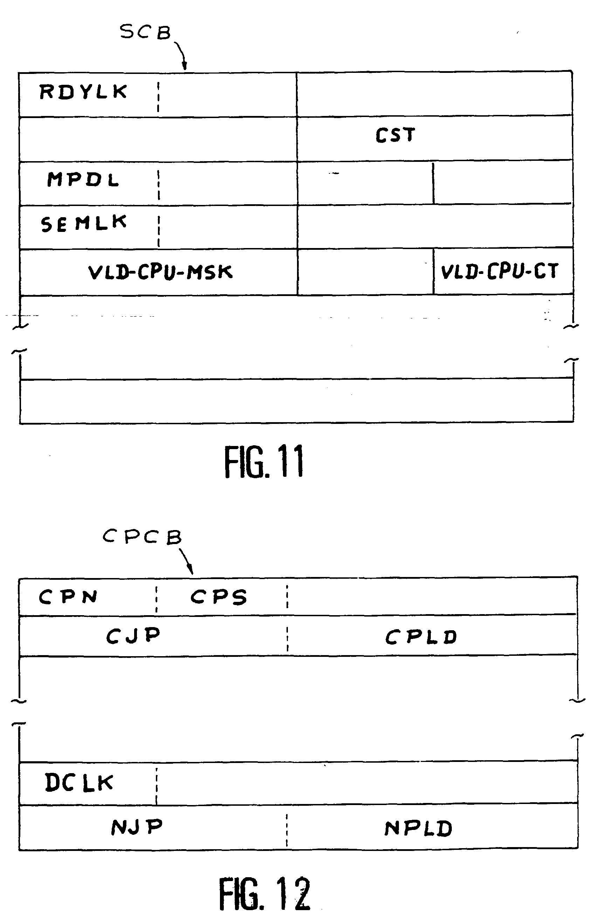

Les opérations SELECT et EXEC nécessitent la manipulation d'un certain nombre d'informations qui vont maintenant être décrites en référence aux figures 11 et 12.

La figure 11 représente une zone mémoire réservée au système, appelée "bloc de contrôle système" SCB qui est notamment utilisé par le module SELECT. Le bloc SCB comporte entre autres les éléments suivants :
- un verrou RDYLK pour protéger la file d'attente des processus prêts Q/PR/RDY ;
- un verrou de dialogue MPDL ;
- un verrou SEMLK de protection des sémaphores ;
- un indicateur CST du nombre de processus avec contrainte constitués dans le système ;
- un masque VLD-CPU-MSK des processeurs valides ;
- un indicateur VLD-CPU-CT du nombre de processeurs valides.

Les verrous qui viennent d'être mentionnés servent dans un système multiprocesseur à empêcher que certaines ressources associées, communes à tout le système, soient modifiées par plusieurs processeurs à la fois. Ainsi, avant d'accéder à une de ces ressources, un processeur effectue d'abord sur le verrou une opération indivisible appelée "TEST AND SET" qui consiste à lire le verrou et s'il est libre (par exemple à 0) à le mettre à l'état occupé (par exemple à 1). Si par contre le verrou est occupé, l'accès à la ressource est interdit.

C'est ainsi que les verrous RDYLK et SEMLK permettent de protéger respectivement la file d'attente Q/PR/RDY et les sémaphores impliqués dans les opérations P et V.

De même, le verrou MPDL est testé avant toute opération impliquant un dialogue entre les processeurs. Ainsi, l'opération SELECT ne peut commencer qu'après avoir testé ce verrou. S'il était libre, il est placé à l'état occupé et l'opération SELECT s'exécute. Bien entendu, il est libéré en fin d'opération.

Le nombre de processus avec contraintes CST est une donnée servant à faciliter l'analyse de la file Q/PR/RDY effectuée par le module SELECT.

Le masque VLD-CPU-MSK sert à la sélection des processeurs destinataires des requêtes. Ce masque est représentatif de la configuration des processeurs valides : chaque position binaire correspond à un processeur et si cette position est à 1, le processeur associé est valide.

Le nombre de processeurs valides VLD-CPU-CT est égal au nombre de bits à "1" dans le masque VLD-CPU-MSK. Ce nombre est utilisé par SELECT pour obtenir la profondeur d'analyse de Q/PR/RDY lorsqu'il n'y a pas de processus avec contraintes (CST = 0). Si CST est différent de zéro, la profondeur d'analyse doit être obtenue par un algorithme particulier de SELECT.

La figure 12 représente une zone mémoire associée à chaque processeur, appelée "bloc de contrôle de processeur" CPCB et servant de boîte aux lettres pour les échanges d'informations entre le processeur émetteur et les processeurs destinataires des requêtes EXECᵢ.

Le bloc CPCB comporte un champ CPN contenant le numéro du processeur, un champ CPS indiquant l'état du processeur, un champ CJP contenant le numéro du processus en cours d'exécution dans le processeur, un champ CPLD représentatif de l'adresse du lien de ce processus dans la file Q/PR/RDY, un champ NJP indiquant le numéro du nouveau processus que le processeur doit exécuter et un champ NPLD indicatif de l'adresse du lien de ce processus.

Le bloc CPCB contient également un indicateur DCLK dont l'état logique signale si la boîte aux lettres est occupée ou non.

La bloc CPCB est utilisé de la façon suivante. Lorsque l'opération SELECT détermine qu'un processus déterminé NJP doit être exécuté par un processeur CPN déterminé, elle accède au bloc CPCB de ce processeur, effectue une opération "TEST AND SET" sur l'indicateur DCLK. Si DCLK est libre, elle le place à l'état occupé et inscrit le numéro du nouveau processus NJP ainsi que le pointeur NPLD associé.

Lorsqu'il effectue l'opération EXEC correspondante, le processeur CPN sélectionné accède à son bloc CPCB pour prendre en compte le numéro NJP du processus à exécuter. D'autre part, lorsque l'opération EXEC est terminée, il replace l'indicateur DCLK à l'état libre. Ce verrou permet donc au processeur exécutant l'opération SELECT de s'assurer avant tout envoi SEND d'une requête que le processeur destinataire n'est pas déjà en train d'exécuter une opération EXEC. C'est pourquoi l'opération SELECT peut être organisée de façon à calculer pendant les première et deuxième étapes le nombre de requêtes sans tenir compte de la possibilité ou non d'envoi effectif de ces requêtes. S'il s'avère au moment de l'exécution de SEND que l'envoi de la requête correspondante est impossible (boîte aux lettres occupée), le nombre de requêtes est décrémenté d'une unité pour prendre en compte le fait qu'un acquittement de moins doit être attendu.

## Revendications

1. Procédé de dialogue entre les processeurs (CPU, CPUᵢ) d'un système informatique multiprocesseur, ledit dialogue se produisant lorsque l'un desdits processeurs (CPU) exécute des opérations (SELECT) déclenchant l'envoi (SEND) de requêtes (EXECᵢ) à destination d'au moins un autre processeur (CPUᵢ), chaque processeur destinataire (CPUᵢ) envoyant au processeur émetteur (CPU) un acquittement (ACKᵢ) pour signaler qu'il prend en compte ladite requête, ledit procédé étant caractérisé en ce que pour toute opération (SELECT) n'impliquant aucune contrainte quant à l'ordre de prise en compte desdites requêtes (EXECᵢ) par les processeurs destinataires, l'exécution de ladite opération se déroule sans tenir compte de la réception par le processeur émetteur (CPU) d'acquittements (ACKᵢ) provoqués par l'envoi de requêtes au cours de ladite opération, en ce qu'on calcule au cours de ladite opération le nombre (CFW) total de requêtes (EXECᵢ) qui sont ou doivent être envoyées par le processeur exécutant ladite opération, en ce qu'on compte le nombre (CHW) d'acquittements reçus par le processeur émetteur (CPU) et en ce que la fin de ladite opération est conditionnée par l'égalité entre ledit nombre (CFW) total de requêtes et ledit nombre (CHW) d'acquittements reçus.

2. Procédé selon la revendication 1, caractérisé en ce que les requêtes et les acquittements ont la forme de messages contenant une indication du type de message (TAG, G, TYPE) et notamment s'il s'agit d'un acquittement, en ce que la réception d'un acquittement par un processeur (CPU) consiste à détecter qu'un message destiné audit processeur (CPU) a été envoyé et que ce message est un acquittement.

3. Procédé selon la revendication 2, caractérisé en ce que le comptage du nombre (CHW) d'acquittements reçus par un processeur (CPU) est effectué indépendamment de la lecture des messages d'acquittement correspondants par les moyens de traitement (CP) dudit processeur (CPU), en ce que ledit nombre (CHW) d'acquittements reçus est placé en permanence dans le dernier message reçu et qui est destiné auxdits moyens de traitement (CP) et en ce que le contrôle de l'égalité entre le nombre (CFW) de requêtes et le nombre (CHW) d'acquittements est effectué par lesdits moyens de traitement (CP) après la lecture dudit dernier message.

4. Procédé selon la revendication 3, caractérisé en ce que la lecture dudit dernier message par lesdits moyens de traitement provoque la remise à zéro dudit nombre (CHW) d'acquittements, sous réserve qu'aucun nouvel acquittement ne survienne lors de ladite lecture et en ce que, après ladite lecture, le nombre (CFW) de requêtes est diminué du nombre (CHW) d'acquittement, l'égalité entre le nombre (CFW) de requêtes et le nombre (CHW) d'acquittements étant alors établie lorsque le nouveau nombre (CFW) de requêtes ainsi calculé est égal à zéro.

5. Procédé selon l'une des revendications 1 à 4, caractérisé en ce que l'exécution par un processeur (CPU) d'une opération susceptible de déclencher l'envoi de requêtes multiples n'est autorisée qu'après avoir testé l'état "libre" d'au moins un verrou (MDPL) système, auquel cas l'exécution effective de ladite opération est précédée de la mise à l'état "occupé" dudit verrou (MDPL) et en ce que ledit verrou est libéré lorsque ladite opération est terminée.

6. Système informatique comportant une pluralité de processeurs (CPU, CPUᵢ) pouvant dialoguer par l'intermédiaire de circuits d'interface (DIR) associés respectivement auxdits processeurs et de liaisons (SB) reliant lesdits circuits d'interface entre eux, l'un au moins desdits processeurs (CPU) comportant des moyens pour exécuter des opérations (SELECT) déclenchant l'envoi de requête (EXECᵢ) à destination d'au moins un autre processeur (CPUᵢ), chaque processeur destinataire (CPUᵢ) comportant des moyens pour envoyer au processeur émetteur (CPU) un acquittement (ACKᵢ) pour signaler qu'il prend en compte une requête qui lui est destinée, ledit système étant caractérisé en ce que ledit processeur (CPU) émetteur de requêtes comporte :
- des premiers moyens de comptage (BDP) permettant de déterminer le nombre (CFW) total de requêtes qui sont ou doivent être émises au cours desdites opérations,
- des seconds moyens de comptage (7B, 7C) activés à chaque réception d'un acquittement,
- des moyens de comparaison (BDP) pour détecter l'égalité entre ledit nombre (CFW) de requêtes et le nombre (CHW) d'acquittement reçus,
et en ce que, pour toute opération qui implique un dialogue sans contrainte quant à l'ordre de prise en compte des requêtes par les processeurs destinataires, ladite détection d'égalité autorise le processeur (CPU) émetteur à terminer l'exécution de ladite opération.

7. Système selon la revendication 6, caractérisé en ce que lesdites requêtes (EXECᵢ) et lesdits acquittements (ACKᵢ) sont du type message comportant un champ d'identification (TAG, G, TYPE) permettant notamment d'indiquer le destinataire du message et si ce message est un acquittement, en ce que chaque processeur (CPU) comporte des moyens de traitement (CP) reliés au circuit d'interface (DIR) dudit processeur (CPU), en ce que ledit circuit d'interface (DIR) comporte des moyens de mémorisation (8, 9) des messages reçus, lesdits moyens de mémorisation (8, 9) étant accessibles en lecture auxdits moyens de traitement (CP), en ce que ledit circuit d'interface (DIR) comporte un circuit d'écriture (7A) desdits moyens de mémorisation (8,9) et un circuit d'analyse (7C) des messages reçus servant à détecter si un message reçu est bien destiné au processeur (CPU) associé, auquel cas ledit circuit d'analyse (7C) commande ledit circuit d'écriture (7A) pour charger le message reçu dans lesdits moyens de mémorisation (8,9), en ce que lesdits seconds moyens de comptage (7B, 7C) comportent un circuit d'incrémentation (7B), en ce que le circuit d'analyse (7C) est en outre conçu de façon à détecter si un message reçu est un acquittement et dans ce cas pour commander le circuit d'incrémentation (7B), en ce que le circuit d'interface (DIR) comporte un circuit de notification (12) pour informer les moyens de traitement (CP) qu'un message destiné au processeur associé (CPU) est disponible dans lesdits moyens de mémorisation (8,9) et en ce que lesdits premiers moyens de comptage (BDP) font partie desdits moyens de traitement (CP).

8. Système selon la revendication 7, caractérisé en ce que lesdits moyens de mémorisation (8,9) comportent des emplacements réservés (8B, 9B) pour contenir le nombre (CHW) d'acquittements reçus fourni par ledit circuit d'incrémentation (7B).

9. Système selon la revendication 8, caractérisé en ce que ledit circuit d'écriture (7A) est conçu de façon à remettre à zéro lesdits moyens de mémorisation (8,9) après leur lecture par les moyens de traitement (CP), sous réserve qu'aucun nouvel acquittement destiné au processeur (CPU) ne soit reçu et en ce que lesdits premiers moyens de comptage sont conçus de façon à décrémenter ledit nombre (CFW) de requêtes de la valeur contenue dans lesdits emplacements réservés (8B, 9B) après ladite lecture.

10. Système selon la revendication 9, caractérisé en ce que lesdits moyens de mémorisation (8, 9) comportent un premier registre (8) dont l'entrée est reliée à la sortie du circuit d'écriture (7A) et un second registre (9) dont l'entrée est reliée à la sortie du premier registre (8), un champ particulier (9B) dudit second registre (9) étant relié à l'entrée du circuit d'incrémentation (7B) dont la sortie est reliée à l'entrée du champ correspondant (8B) du premier registre (8), ledit circuit d'incrémentation (7B) fournissant à sa sortie une valeur égale au contenu dudit champ particulier (9B) ou bien la valeur zéro en cas de remise à zéro, augmentée d'une unité lorsque la réception d'un acquittement destiné au processeur (CPU) est détectée par le circuit d'analyse (7C).

11. Système selon l'une des revendications 9 ou 10, caractérisé en ce que lesdits moyens de traitement (CP) comportent au moins une unité microprogrammée (BDP), lesdites opérations (SELECT) correspondant à des microprogrammes exécutées par ladite unité microprogrammée, en ce que lesdits premiers moyens de comptage sont réalisés par un algorithme de comptage microprogrammé, appelé compteur micrologiciel, prévu dans lesdits microprogrammes et en ce que la lecture desdits emplacements réservés (8B, 9B) provoque la décrémentation du compteur micrologiciel d'une valeur égale au contenu desdits emplacements réservés.

12. Système selon la revendication 11, caractérisé en ce que l'exécution dudit microprogramme n'est autorisée qu'après une opération de test de l'état "libre" d'au moins un verrou (MPDL) système, auquel cas l'exécution effective dudit microprogramme est précédée de la mise à l'état "occupé" dudit verrou (MPDL) et en ce que ledit microprogramme libère ledit verrou à la fin de son exécution.

13. Système selon la revendication 12, caractérisé en ce que la lecture du nombre (CHW) d'acquittements reçus est programmée à la fin dudit microprogramme, avant la libération du verrou (MPDL).

14. Procédé pour effectuer la répartition des processus (JP) aux processeurs (CPU, CPUᵢ) d'un système et comprenant notamment les étapes suivantes :
- en réponse à un événement susceptible de provoquer une modification dans le choix des processus devant être exécutés, déclenchement dans l'un desdits processeurs d'une opération de sélection (SELECT) pour déterminer l'attribution des processus aux processeurs du système en fonction d'un ordre de priorité des processus prêts à être exécutés,
- au cours de ladite opération de sélection (SELECT), envoi à chaque processeur (CPUᵢ) sélectionné d'une requête (EXECᵢ) destinée à l'informer de l'identité du processus qui lui est affecté pour exécution et réponse par le processeur destinataire par l'envoi d'un acquittement (ACKᵢ),
- ledit procédé étant caractérisé en ce qu'il utilise le procédé de dialogue selon l'une des revendications 1 à 5 pour effectuer ladite opération de sélection.

15. Procédé selon la revendication 14, caractérisé en ce que ladite opération de sélection comprend :
- une première étape au cours de laquelle sont traités les cas avec contrainte, c'est-à-dire : identification des processus (NJP) affectés à des processeurs (CPUᵢ) particuliers puis, pour chaque processus (CPUᵢ) sélectionné incrémentation des premiers moyens de comptage (BDP) et envoi d'une requête (EXECᵢ) au processeur (CPUᵢ) sélectionné ,
- une seconde étape de traitement des cas sans contrainte, c'est-à-dire : détermination des processus restant à affecter puis, pour chaque processus ainsi sélectionné incrémentation des premiers moyens de comptage (BDP) et chargement dans une pile de son identité,
- une troisième étape de vidage de ladite pile au cours de laquelle, pour chaque processus extrait de la pile, une requête (EXECᵢ) est envoyée à un processeur restant disponible.

16. Procédé selon la revendication 15, caractérisé en ce que le nombre (CFW) de requêtes (EXECᵢ) est calculé au cours des première et seconde étapes sans tenir compte de la possibilité d'envoi effectif desdites requêtes (EXECᵢ) et en ce que, en cas d'impossibilité d'envoi effectif d'une requête (EXECᵢ) lors de l'exécution de la première ou de la troisième étape, le nombre (CFW) de requêtes est décrémenté d'une unité.

## Patentansprüche

1. Verfahren für den Dialog zwischen den Prozessoren (CPU, CPUᵢ) eines Multiprozessor-Datenverarbeitungssystems, wobei der Dialog entsteht, wenn einer der Prozessoren (CPU) Operationen (SELECT) ausführt, die das Schicken (SEND) von Anforderungen (EXECᵢ) an wenigstens einen anderen Prozessor (CPUᵢ) auslösen, wobei jeder Zielprozessor (CPUᵢ) an den Sendeprozessor (CPU) eine Bestätigung (ACKᵢ) schickt, um zu melden, daß er die Anforderung berücksichtigt, wobei das Verfahren dadurch gekennzeichnet ist, daß für jede Operation (SELECT), die hinsichtlich der Reihenfolge der Berücksichtigung der Anforderungen (EXECᵢ) durch die Zielprozessoren keinerlei Beschränkung auferlegt, die Ausführung der Operation ohne Berücksichtigung des Empfangs von durch das Schicken von Anforderungen während der Operation hervorgerufenen Bestätigungen (ACKᵢ) erfolgt, daß während der Operation die Gesamtzahl (CFW) von Anforderungen (EXECᵢ), die von dem die Operation ausführenden Prozessor geschickt werden oder geschickt werden sollen, berechnet wird, daß die Anzahl (CHW) von Bestätigungen, die vom Sendeprozessor (CPU) empfangen werden, gezählt wird und daß das Ende der Operation durch die Gleichheit zwischen der Gesamtzahl (CFW) von Anforderungen und der Anzahl (CHW) von empfangenen Bestätigungen bestimmt ist.

2. Verfahren nach Anspruch 1, dadurch gekennzeichnet, daß die Anforderungen und die Bestätigungen die Form von Nachrichten besitzen, die einen Hinweis auf den Nachrichtentyp (TAG, G, TYPE) und insbesondere darauf, ob es sich um eine Bestätigung handelt, enthalten, und daß der Empfang einer Bestätigung durch einen Prozessor (CPU) darin besteht, daß erfaßt wird, daß eine für den Prozessor (CPU) bestimmte Nachricht geschickt worden ist und daß diese Nachricht eine Bestätigung ist.

3. Verfahren nach Anspruch 2, dadurch gekennzeichnet, daß die Zählung der Anzahl (CHW) von von einem Prozessor (CPU) empfangenen Bestätigungen unabhängig vom Lesen der entsprechenden Bestätigungsnachrichten durch die Verarbeitungsmittel (CP) des Prozessors (CPU) erfolgt, daß die Anzahl (CHW) von empfangenen Bestätigungen ständig in der letzten empfangenen und für die Verarbeitungsmittel (CP) bestimmten Nachricht angeordnet wird, und daß die Kontrolle der Gleichheit zwischen der Anzahl (CFW) von Anforderungen und der Anzahl (CHW) von Bestätigungen durch die Verarbeitungsmittel (CP) nach dem Lesen der letzten Nachricht erfolgt.

4. Verfahren nach Anspruch 3, dadurch gekennzeichnet, daß das Lesen der letzten Nachricht durch die Verarbeitungsmittel das Zurücksetzen auf Null der Anzahl (CHW) hervorruft, vorausgesetzt, daß seit diesem Lesen keinerlei neue Bestätigung aufgetreten ist, und daß nach dem Lesen die Anzahl (CFW) von Anforderungen um die Anzahl (CHW) von Bestätigungen verringert wird, wobei die Gleichheit zwischen der Anzahl (CFW) von Anforderungen und der Anzahl (CHW) von Bestätigungen dann hergestellt ist, wenn die so berechnete neue Anzahl (CFW) von Anforderungen gleich Null ist.

5. Verfahren nach einem der Ansprüche 1 bis 4, dadurch gekennzeichnet, daß die Ausführung einer Operation durch einen Prozessor (CPU), die das Schicken von mehreren Anforderungen auslösen kann, nur zugelassen wird, wenn der "freie" Zustand wenigstens einer Systemsperre (MDPL) geprüft worden ist, wobei in diesem Fall der eigentlichen Ausführung der Operation die Versetzung der Sperre (MDPL) in den "belegten" Zustand vorhergeht, und daß die Sperre freigegeben wird, wenn die Operation beendet ist.

6. Datenverarbeitungssystem, das mehrere Prozessoren (CPU, CPUᵢ) enthält, die über Schnittstellenschaltungen (DIR), die den jeweiligen Prozessoren zugeordnet sind, und über Verbindungen (SB), die die Schnittstellenschaltungen miteinander verbinden, einen Dialog führen können, wobei wenigstens einer der Prozessoren (CPU) Mittel zum Ausführen von Operationen (SELECT) enthält, die das Schicken einer Anforderung (EXECᵢ) an wenigstens einen anderen Prozessor (CPUᵢ) auslösen können, wobei jeder Zielprozessor (CPUᵢ) Mittel enthält, um an den Sendeprozessor (CPU) eine Bestätigung (ACKᵢ) zu schicken, um zu melden, daß er eine für ihn bestimmte Anforderung berücksichtigt, wobei das System dadurch gekennzeichnet ist, daß der Anforderungen sendende Prozessor (CPU) enthält:
- erste Zählmittel (BDP), die die Bestimmung der Gesamtzahl (CFW) von Anforderungen ermöglichen, die während der Operationen gesendet werden oder gesendet werden sollen,
- zweite Zählmittel (7B, 7C), die bei jedem Empfang einer Bestätigung aktiviert werden,
- Vergleichsmittel (BDP), um die Gleichheit zwischen der Anzahl (CFW) von Anforderungen und der Anzahl (CHW) von empfangenen Bestätigungen zu erfassen,
und daß für jede Operation, die einen Dialog ohne Beschränkung hinsichtlich der Reihenfolge der Berücksichtigung der Anforderungen durch die Zielprozessoren umfaßt, die Erfassung der Gleichheit dem Sendeprozessor (CPU) erlaubt, die Ausführung der Operation zu beenden.

7. System nach Anspruch 6, dadurch gekennzeichnet, daß die Anforderungen (EXECᵢ) und die Bestätigungen (ACKᵢ) vom Typ Nachricht sind, die ein Identifizierungsfeld (TAG, G, TYPE) enthält, das insbesondere die Angabe des Ziels der Nachricht und der Tatsache, ob diese Nachricht eine Bestätigung ist, ermöglicht, daß jeder Prozessor (CPU) Verarbeitungsmittel (CP) enthält, die mit der Schnittstellenschaltung (DIR) des Prozessors (CPU) verbunden sind, daß die Schnittstellenschaltung (DIR) Speichermittel (8, 9) für empfangene Nachrichten enthält, wobei die Verarbeitungsmittel (CP) im Lesemodus auf die Speichermittel (8, 9) zugreifen können, daß die Schnittstellenschaltung (DIR) eine Schaltung (7A) zum Schreiben in die Speichermittel (8, 9) sowie eine Schaltung (7C) zum Analysieren der empfangenen Nachrichten enthält, was der Erfassung dient, ob eine empfangene Nachricht wirklich für den zugeordneten Prozessor (CPU) bestimmt ist, wobei in diesem Fall die Analysierschaltung (7C) die Schreibschaltung (7A) in der Weise steuert, daß diese die empfangene Nachricht in die Speichermittel (8, 9) lädt, daß die zweiten Zählmittel (7B, 7C) eine Inkrementierungsschaltung (7B) enthalten, daß die Analysierschaltung (7C) außerdem so beschaffen ist, daß sie erfaßt, ob eine empfangene Nachricht eine Bestätigung ist, und in diesem Fall die Inkrementierungsschaltung (7B) steuert, daß die Schnittstellenschaltung (DIR) eine Meldeschaltung (12) enthält, um den Verarbeitungsmitteln (CP) zu melden, daß eine für den zugeordneten Prozessor (CPU) bestimmte Nachricht in den Speichermitteln (8, 9) verfügbar ist, und daß die ersten Zählmittel (BDP) Teil der Verarbeitungsmittel (CP) sind.

8. System nach Anspruch 7, dadurch gekennzeichnet, daß die Speichermittel (8, 9) reservierte Plätze (8B, 9B) enthalten, die die Anzahl (CHW) von empfangenen Bestätigungen enthalten, die von der Inkrementierungsschaltung (7B) geliefert wird.

9. System nach Anspruch 8, dadurch gekennzeichnet, daß die Schreibschaltung (7A) so beschaffen ist, daß sie die Speichermittel (8, 9) auf Null zurücksetzt, nachdem sie von den Verarbeitungsmitteln (CP) gelesen worden sind, vorausgesetzt, daß keinerlei neue Bestätigung, die für den Prozessor (CPU) bestimmt ist, empfangen wird, und daß die ersten Zählmittel so beschaffen sind, daß sie die Anzahl (CFW) von Anforderungen um den Wert dekrementieren, der in den reservierten Plätzen (8B, 9B) nach dem Lesen enthalten ist.

10. System nach Anspruch 9, dadurch gekennzeichnet, daß die Speichermittel (8, 9) ein erstes Register (8), dessen Eingang mit dem Ausgang der Schreibschaltung (7A) verbunden ist, sowie ein zweites Register (9), dessen Eingang mit dem Ausgang des ersten Registers (8) verbunden ist, enthalten, wobei ein besonderes Feld (9B) des zweiten Registers (9) mit dem Eingang der Inkrementierungsschaltung (7B) verbunden ist, deren Ausgang mit dem Eingang des entsprechenden Feldes (8B) des ersten Registers (8) verbunden ist, wobei die Inkrementierungsschaltung (7B) an ihrem Ausgang einen Wert liefert, der gleich dem Inhalt des besonderen Feldes (9B) ist oder, im Fall der Zurücksetzung auf Null, null ist und um eine Einheit erhöht wird, wenn von der Analysierschaltung (7C) der Empfang einer für den Prozessor (CPU) bestimmten Bestätigung erfaßt wird.

11. System nach einem der Ansprüche 9 oder 10, dadurch gekennzeichnet, daß die Verarbeitungsmittel (CP) wenigstens eine mikroprogrammierte Einheit (BDP) enthalten, wobei die Operationen (SELECT) Mikroprogrammen entsprechen, die von der mikroprogrammierten Einheit ausgeführt werden, daß die ersten Zählmittel durch einen mikroprogrammierten Zählalgorithmus verwirklicht sind, der Mikrosoftware-Zähler genannt wird und in den Mikroprogrammen vorgesehen ist, und daß das Lesen der reservierten Plätze (8B, 9B) die Dekrementierung des Mikrosoftware-Zählers um einen Wert, der gleich dem Inhalt der reservierten Plätze ist, hervorruft.

12. System nach Anspruch 11, dadurch gekennzeichnet, daß die Ausführung des Mikroprogramms nur nach einer Operation des Prüfens des "freien" Zustands wenigstens einer Systemsperre (MPDL) zugelassen wird, wobei in diesem Fall der eigentlichen Ausführung des Mikroprogramms die Versetzung der Sperre (MPDL) in den "belegten" Zustand vorhergeht, und daß das Mikroprogramm die Sperre am Ende seiner Ausführung freigibt.

13. System nach Anspruch 12, dadurch gekennzeichnet, daß das Lesen der Anzahl (CHW) von empfangenen Bestätigungen am Ende des Mikroprogramms vor der Freigabe der Sperre (MPDL) programmiert ist.

14. Verfahren zum Ausführen der Verteilung von Prozessen (JP) auf die Prozessoren (CPU, CPUᵢ) eines Systems, insbesondere mit den folgenden Schritten:
- Auslösen einer Auswahloperation (SELECT) in einem der Prozessoren als Antwort auf ein Ereignis, das eine Modifikation in der Wahl der Prozesse, die ausgeführt werden müssen, hervorrufen kann, um so die Zuweisung der Prozesse an die Prozessoren des Systems in Abhängigkeit von einer Prioritätsreihenfolge der für die Ausführung bereiten Prozesse zu bestimmen,
- während der Auswahloperation (SELECT) Schicken einer Anforderung (EXECᵢ) an jeden ausgewählten Prozessor (CPUᵢ), die dazu bestimmt ist, ihm die Identität des Prozesses zu melden, der ihm zur Ausführung zugewiesen ist, und Antworten durch den Zielprozessor durch Schicken einer Bestätigung (ACKᵢ),
- wobei das Verfahren dadurch gekennzeichnet ist, daß es das Dialogverfahren nach einem der Ansprüche 1 bis 5 verwendet, um die Auswahloperation auszuführen.

15. Verfahren nach Anspruch 14, dadurch gekennzeichnet, daß die Auswahloperation umfaßt:
- einen ersten Schritt, in dessen Verlauf die Fälle mit Beschränkung verarbeitet werden, d. h.: Identifizieren der den besonderen Prozessoren (CPUᵢ) zugewiesenen Prozesse (NJP), und dann für jeden ausgewählten Prozeß (CPUᵢ) Inkrementieren der ersten Zählmittel (BPD) und Schicken einer Anforderung (EXECᵢ) an den ausgewählten Prozessor (CPUᵢ),
- einen zweiten Schritt der Verarbeitung der Fälle ohne Beschränkung, d. h.: Bestimmen der noch zuzuweisenden Prozesse und dann für jeden so ausgewählten Prozeß Inkrementieren der ersten Zählmittel (BDP) und Laden seiner Identität in einen Stapel,
- einen dritten Schritt der Leerung des Stapels, in dessen Verlauf für jeden aus dem Stapel entnommenen Prozeß eine Anforderung (EXECᵢ) an einen verfügbar gebliebenen Prozessor geschickt wird.

16. Verfahren nach Anspruch 15, dadurch gekennzeichnet, daß die Anzahl (CFW) von Anforderungen (EXECᵢ) während des ersten und des zweiten Schrittes berechnet wird, ohne zu berücksichtigen, ob die Anforderungen (EXECᵢ) tatsächlich geschickt werden können, und daß in dem Fall, in dem eine Anforderung (EXECᵢ) während der Ausführung des ersten oder des dritten Schrittes nicht geschickt werden kann, die Anzahl (CFW) von Anforderungen um eine Einheit dekrementiert wird.

## Claims

1. Method of dialogue between the processors (CPU, CPUᵢ) of a multiprocessor computer system, said dialogue occurring when one of said processors (CPU) executes operations (SELECT) triggering the sending (SEND) of requests (EXECᵢ) to a destination of at least one other processor (CPUᵢ), each destination processor (CPUᵢ) sending to the emitting processor (CPU) an acknowledgement (ACKᵢ) to notify that it is dealing with said request, said method being characterised in that, for every operation (SELECT) not involving any constraint as to the order of dealing with said requests (EXECᵢ) by the destination processors, the execution of said operation takes place without taking account of the receipt by the emitting processor (CPU) of acknowledgements (ACKᵢ) caused by sending requests during said operation, in that a calculation is made during said operation of the total number (CFW) of requests (EXECᵢ) that are or must be sent by the processor executing said operation, and in that the number (CHW) of acknowledgements received by the emitting processor (CPU) is counted and in that the end of said operation is conditioned by the equality between said total number (CFW) of requests and said number (CHW) of acknowledgements received.

2. Method according to Claim 1, characterised in that the requests and acknowledgements have the form of messages containing an indication of the type of message (TAG, G, TYPE) and particularly whether it is an acknowledgement, in that the receipt of an acknowledgement by a processor (CPU) consists in detecting that a message intended for said processor (CPU) has been sent and that this message is an acknowledgement.

3. Method according to Claim 2, characterised in that the counting of the number (CHW) of acknowledgements received by a processor (CPU) is performed independently of the reading of the corresponding acknowledgement messages by the processing means (CP) of said processor (CPU), in that said number (CHW) of acknowledgements is placed permanently in the last message received and which is addressed to said processing means (CP) and in that the monitoring of equality between the number (CFW) of requests and the number (CHW) of acknowledgements is performed by said processing means (CP) after said last message has been read.

4. Method according to Claim 3, characterised in that the reading of said last message by said processing means causes said number (CHW) of acknowledgements to be reset to zero, subject to no new acknowledgement arising at the time of said reading and in that, after said reading, the number (CFW) of requests is reduced by the number (CHW) of acknowledgements, the equality between the number (CFW) of requests and the number (CHW) of acknowledgements then being established when the new number (CFW) of requests thus calculated is equal to zero.

5. Method according to one of Claims 1 to 4, characterised in that the execution by a processor (CPU) of an operation likely to trigger the sending of multiple requests is authorised only after having tested the "free" state of at least one system lock (MDPL), in which case the actual execution of said operation is preceded by putting said lock (MDPL) into the "engaged" state and in that said lock is released when said operation is terminated.

6. Computer system comprising a plurality of processors (CPU, CPUᵢ) that can dialogue via interface circuits (DIR) associated respectively with said processors and links (SB) connecting said interface circuits to each other, at least one of said processors (CPU) comprising means for executing operations (SELECT) triggering the sending of a request (EXECᵢ) to a destination of at least one other processor (CPUᵢ), each destination processor (CPUᵢ) comprising means for sending to the emitting processor (CPU) an acknowledgement (ACKᵢ) to notify that it is dealing with a request addressed to it, said system being characterised in that said processor (CPU) emitting requests comprises:
- first counting means (BDP) making it possible to determine the total number (CFW) of requests that are or must be emitted during said operations,
- second counting means (7B, 7C) activated at each reception of an acknowledgement,
- comparison means (BDP) for detecting equality between said number (CFW) of requests and the number (CHW) of acknowledgements received,
and in that, for any operation involving a dialogue with no constraint as to the order of dealing with requests by the destination processors, said detection of equality authorises the emitting processor (CPU) to terminate the execution of said operation.

7. System according to Claim 6, characterised in that said requests (EXECᵢ) and said acknowledgements (ACKᵢ) are of the message type comprising an identification field (TAG, G, TYPE) making it possible in particular to indicate the addressee of the message and whether this message is an acknowledgement, in that each processor (CPU) comprises processing means (CP) connected to the interface circuit (DIR) of said processor (CPU), in that said interface circuit (DIR) comprises means (8, 9) for storing the messages received, said storage means (8, 9) being accessible in read mode to said processing means (CP), in that said interface circuit (DIR) comprises a write circuit (7A) for said storage means (8, 9) and an analysis circuit (7C) for the messages received, serving to detect whether a message received is indeed intended for the associated processor (CPU), in which case said analysis circuit (7C) commands said write circuit (7A) to load the message received into said storage means (8, 9), in that said second counting means (7B, 7C) comprise an incrementation circuit (7B), in that the analysis circuit (7C) is further designed so as to detect whether a message received is an acknowledgement and in this case to control the incrementation circuit (7B), in that the interface circuit (DIR) comprises a notification circuit (12) to inform the processing means (CP) that a message intended for the associated processor (CPU) is available in said storage means (8, 9) and in that said first counting means (BDP) form part of said processing means (CP).

8. System according to Claim 7, characterised in that said storage means (8, 9) comprise reserved locations (8B, 9B) to contain the number (CHW) of received acknowledgements supplied by said incrementation circuit (7B).

9. System according to Claim 8, characterised in that said write circuit (7A) is designed so as to reset to zero said storage means (8, 9) after they have been read by the processing means (CP), subject to no new acknowledgement intended for the processor (CPU) being received and in that said first counting means are designed so as to decrement said number (CFW) of requests by the value contained in said reserved locations (8B, 9B) after said reading.

10. System according to Claim 9, characterised in that said storage means (8, 9) comprise a first register (8), the input of which is connected to the output of the write circuit (7A) and a second register (9), the input of which is connected to the output of the first register (8), a particular field (9B) of said second register (9) being connected to the input of the incrementation circuit (7B), the output of which is connected to the input of the corresponding field (8B) of the first register (8), said incrementation circuit (7B) supplying at its output a value equal to the content of said particular field (9B) or else the value zero in the case of resetting to zero, increased by one unit when the receipt of an acknowledgement intended for the processor (CPU) is detected by the analysis circuit (7C).

11. System according to one of Claims 9 or 10, characterised in that said processing means (CP) comprise at least one microprogrammed unit (BDP), said operations (SELECT) corresponding to microprograms executed by said microprogrammed unit, in that said first counting means are produced by a microprogrammed counting algorithm, known as a firmware counter, provided in said microprograms and in that the reading of said reserved locations (8B, 9B) causes the decrementation of the firmware counter by a value equal to the content of said reserved locations.

12. System according to Claim 11, characterised in that the execution of said microprogram is authorised only after an operation to test the "free" state of at least one system lock (MPDL), in which case the actual execution of said microprogram is preceded by said lock (MPDL) being put into the "engaged" state and in that said microprogram releases said lock at the end of its execution.

13. System according to Claim 12, characterised in that the reading of the number (CHW) of acknowledgements received is programmed at the end of said microprogram, before the release of the lock (MPDL).

14. Method to carry out the distribution of the processes (JP) to the processors (CPU, CPUᵢ) of a system and comprising the following steps in particular:
- in response to an event likely to cause a modification to the choice of processes that have to be executed, triggering in one of said processors of a selection operation (SELECT) in order to determine the allocation of the processes to the processors of the system depending on an order of priority of the processes ready to be executed,
- during said selection operation (SELECT), sending to each selected processor (CPUᵢ) of a request (EXECᵢ) intended to inform it of the identity of the process assigned to it for execution and response by the destination processor by the sending of an acknowledgement (ACKᵢ),
- said method being characterised in that it uses the method of dialogue according to one of Claims 1 to 5 in order to perform said selection operation.

15. Method according to Claim 14, characterised in that said selection operation comprises:
- a first step during which the cases with constraint are processed, i.e.: identification of the processes (NJP) assigned to particular processors (CPUᵢ) then, for each process (CPUᵢ) selected, incrementation of the first counting means (BDP) and sending of a request (EXECᵢ) to the selected processor (CPUᵢ),
- a second step of processing the cases without constraint, i.e.: determination of the processes that still have to be assigned then, for each process selected in this way, incrementation of the first counting means (BDP) and loading of its identity into a stack,
- a third step of emptying said stack during which, for each process extracted from the stack, a request (EXECᵢ) is sent to a processor that is still available.

16. Method according to Claim 15, characterised in that the number (CFW) of requests (EXECᵢ) is calculated during the first and second steps without taking account of the possibility of actually sending said requests (EXECᵢ) and in that, should it be impossible to actually send a request (EXECᵢ) during the execution of the first or third step, the number (CFW) of requests is decremented by one unit.
